(19) Europäisches Patentamt
European Patent Office
Office européen des brevets

(11) **EP 2 634 537 B1**

(12) **FASCICULE DE BREVET EUROPEEN**

(45) Date de publication et mention
de la délivrance du brevet:
**27.08.2014  Bulletin 2014/35**

(51) Int Cl.:
***G01D 4/00*** *(2006.01)*      ***G01D 5/30*** *(2006.01)*
***G01D 5/32*** *(2006.01)*

(21) Numéro de dépôt: **13354009.6**

(22) Date de dépôt: **21.02.2013**

(54) **Procédé d'étalonnage d'un appareil électronique de comptage de tours d'un repère entraîné dans un compteur de consommation et appareil électronique de comptage de tours d'un tel repère**

Eichverfahren eines elektrischen Geräts zum Zählen der Umdrehungen einer angetriebenen Eichmarke in einem Verbrauchszähler, und elektronisches Gerät zum Zählen der Umdrehungen einer solchen Eichmarke

Method for calibrating an electronic apparatus for counting revolutions of a mark rotating in a consumption meter and electronic apparatus for counting the revolutions of such a mark

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.02.2012  FR 1200604**

(43) Date de publication de la demande:
**04.09.2013  Bulletin 2013/36**

(73) Titulaire: **Schneider Electric Industries SAS**
**92500 Rueil-Malmaison (FR)**

(72) Inventeurs:
• **Moliton, Vivien**
**38180 Seyssins (FR)**

• **Garcia-Viano, Pablo**
**38320 Eybens (FR)**

(74) Mandataire: **Talbot, Alexandre et al**
**Cabinet Hecké**
**Europole**
**10, rue d'Arménie - BP 1537**
**38025 Grenoble Cedex 1 (FR)**

(56) Documents cités:
**WO-A1-02/40946      GB-A- 2 303 712**
**GB-A- 2 303 915**

## Description

## Domaine technique de l'invention

L'invention se rapporte au domaine des appareils électroniques de comptage de tours d'un repère entraîné dans un compteur de consommation. Plus précisément, elle concerne un procédé du type procédé d'étalonnage d'un tel appareil électronique.

L'invention concerne également un appareil électronique de comptage de tours d'un repère entraîné dans un compteur de consommation. L'appareil électronique en question est d'un type selon lequel il comporte un dispositif de mesure d'une grandeur lumineuse relative à un rayonnement en provenance d'une région observée où passe ledit repère.

## État de la technique

Les compteurs électriques ont pour fonction de mesurer une consommation électrique, c'est-à-dire une énergie consommée entre deux dates. Il existe également d'autres compteurs spécifiques, comme les compteurs de gaz ou comme les compteurs d'eau servant à mesurer des volumes d'eau consommés.

Le suivi d'une consommation à distance et/ou au moyen d'un ordinateur requiert un signal électrique, que les compteurs mécaniques ne délivrent malheureusement pas. Toutefois, ces compteurs mécaniques ont généralement en commun de laisser voir un organe dont le mouvement rotatif peut renseigner sur la consommation en cours. Par exemple, parmi les compteurs électriques, les compteurs électromécaniques comportent un disque rotatif dont la vitesse angulaire est fonction de la puissance consommée.

Une révolution complète du disque rotatif signifie donc la consommation d'une certaine quantité d'énergie électrique. Cela est employé dans des appareils optiques qui détectent les révolutions du disque rotatif et qui en déduisent une consommation électrique exprimée sous une forme compatible avec une communication électronique et/ou un traitement informatique. De manière connue, un tel appareil comporte une source lumineuse éclairant le disque au niveau de son bord périphérique. Un capteur photosensible est dirigé vers le bord du disque, de manière à recevoir de la lumière réfléchie par ce bord, qui porte un repère. La lumière réfléchie par le bord du disque connaît une chute d'intensité à chaque fois que le repère passe devant la source lumineuse. Cette chute d'intensité est identifiée, ce qui est ensuite employé pour un comptage des révolutions du disque.

Les compteurs électriques susceptibles d'être équipés d'un appareil optique de détection de révolutions diffèrent les uns des autres. En particulier, ils ne possèdent pas les mêmes disques rotatifs, ni les mêmes vitres devant ces disques. Par exemple, le bord du disque peut être ou non cranté et il peut être plus ou moins large. Les repères sur les disques sont également très divers, notamment quant à leurs matières et/ou à leurs couleurs. En outre, le dépôt de salissures, le vieillissement des matériaux et leur oxydation, ainsi que d'autres facteurs de dégradation avec le temps, influent sur les mesures, tandis que les positions relatives de la source lumineuse, du disque et du capteur photosensible sont déterminées lors de l'installation initiale, tout en pouvant être modifiées par divers évènements en cours de fonctionnement.

Comme plusieurs paramètres influent sur les mesures, il est prévu qu'un étalonnage manuel soit réalisé individuellement sur chaque appareil optique équipant un compteur électrique. Cet étalonnage manuel présente l'inconvénient d'être consommateur de temps et coûteux.

Dans la demande de brevet du Royaume-Uni GB-2 303 712 A est proposée une solution pour éviter un étalonnage manuel. Elle repose sur l'emploi d'une manière spécifique d'analyser le signal délivré par le capteur photosensible et d'identifier des impulsions dans ce signal. Le capteur photosensible réalise une mesure continue, de manière à pouvoir fournir un signal continu à analyser. Or, on ne dispose parfois que d'une mesure discontinue de la lumière en provenance du disque rotatif. En outre, la solution exposée dans la demande GB-2 303 712 A n'est pas adaptable à un appareil optique disposant de sa propre manière de compter les tours du disque rotatif à partir du signal fourni par le capteur photosensible. Par ailleurs, on ne dispose pas d'une connaissance des difficultés particulières liés à la mise en oeuvre de cette solution, ni d'une évaluation de sa fiabilité. On souhaite pouvoir disposer d'une solution alternative.

Dans la demande de brevet du Royaume-Uni GB-2 349 945 A, il est également proposé une manière spécifique d'analyser un signal délivré par le capteur photosensible. Cette manière est basée sur la reconnaissance d'une séquence qui se répète à chaque tour du disque rotatif, dans le signal délivré par le capteur photosensible. Cette reconnaissance met en oeuvre des moyens informatiques conséquents. Par ailleurs, on ne dispose pas d'une évaluation de la fiabilité du procédé spécifique d'analyse du signal et de son efficacité dans des circonstances diverses. D'autres inconvénients sont communs à la solution proposée dans la demande GB-2 349 945 A et à celle proposée dans la demande GB-2 303 712 A.

## Objet de l'invention

L'invention a au moins pour but de permettre de s'affranchir de la nécessité d'étalonner manuellement un appareil de comptage du type précité.

Selon l'invention, ce but est atteint grâce à un procédé d'étalonnage qui est du type précité et qui comporte des étapes dans lesquelles :

a) à différents moments successifs pendant plus d'un tour complet du repère, on relève des mesures d'une grandeur lumineuse relative à un rayonnement en provenance d'une région observée où passe ledit repère, et

b) on effectue une moyenne glissante sur lesdites mesures, puis

c) à partir de la moyenne glissante, on définit au moins un seuil tel que le franchissement de ce seuil signifie un passage du repère dans la région observée.

Le procédé d'étalonnage selon l'invention peut incorporer une ou plusieurs autres caractéristiques avantageuses, isolément ou en combinaison, en particulier parmi celles définies ci-après.

Avantageusement, l'étape c) comprend elle-même des étapes dans lesquelles :

c1) on identifie un minimum et un maximum de la moyenne glissante,

c2) on calcule l'écart séparant le minimum du maximum, et

c3) au moins à partir dudit écart et d'un extrémum choisi parmi le minimum et le maximum, on définit au moins ledit seuil.

Avantageusement, le procédé d'étalonnage comprend des étapes qui suivent l'étape c2) et dans lesquelles :

- on compare l'écart à une limite prédéterminée, et
- si l'écart est inférieur à la limite prédéterminée, on déclenche une alarme.

Avantageusement, dans l'étape c3), on détermine ledit seuil comme étant égal à la somme de l'extrémum choisi et d'un produit dudit écart par un coefficient qui est supérieur à 0 et inférieur à 1, si l'extrémum choisi est ledit minimum, et qui est supérieur à -1 et inférieur à 0, si l'extrémum choisi est ledit maximum.

Avantageusement, dans l'étape c3), on détermine ledit seuil comme étant égal à la somme dudit minimum et d'un produit dudit écart par un coefficient qui est supérieur à 0 et inférieur à 1, et on détermine un autre seuil comme étant égal à la somme dudit maximum et d'un produit dudit écart par un autre coefficient qui est supérieur à -1 et inférieur à 0.

Avantageusement, le ou chaque coefficient a une valeur absolue comprise entre 0,1 et 0,4.

Avantageusement, dans l'étape a), on effectue des éclairages intermittents en direction d'une zone où ledit repère passe dans la région observée, chacune desdites mesures portant sur une quantité de rayonnement en provenance de la région observée, pendant l'un des éclairages.

Avantageusement, dans l'étape b), on choisit une mesure particulière parmi les mesures et, jusqu'à une réponse positive à un test de fin, on réitère une suite d'étapes dans lesquelles :

- parmi les mesures, on sélectionne un groupe de mesures qui se précèdent dans le temps à partir de ladite mesure particulière, puis
- on effectue une moyenne sur les mesures du groupe, puis
- à la mesure particulière, on attribue le statut d'ancienne mesure particulière et, parmi les mesures, on choisit comme mesure particulière une mesure qui n'a pas le statut d'ancienne mesure particulière.

L'invention a également pour objet un appareil électronique qui est du type précité et qui comporte :

- un moyen pour relever des mesures réalisées par le dispositif de mesure à différents moments successifs pendant plus d'un tour complet du repère,
- un moyen pour effectuer une moyenne glissante sur lesdites mesures,
- un moyen pour définir, à partir de la moyenne glissante, au moins un seuil tel que le franchissement de ce seuil signifie un passage du repère dans la région observée.

Avantageusement, l'appareil électronique est adapté pour s'étalonner en conduisant pour lui-même un procédé tel que défini précédemment.

**Description sommaire des dessins**

D'autres avantages et caractéristiques ressortiront plus clairement de la description qui va suivre de modes particuliers de réalisation de l'invention donnés à titre d'exemples non limitatifs et représentés aux dessins annexés, parmi lesquels :

- la figure 1 est une élévation schématique d'un compteur électromécanique de consommation d'électricité vu de face et d'un appareil électronique de détection et de comptage qui équipe ce compteur de manière à pouvoir y compter les tours d'un disque rotatif et qui est conforme à l'invention,
- la figure 2 est une vue schématique, en coupe selon le plan II de la figure 1, et représente l'une de deux unités constitutives de l'appareil de détection et de comptage, ainsi qu'une portion du disque rotatif et d'une enveloppe du compteur de consommation,
- la figure 3 est un organigramme représentant la logique d'un procédé qui est conforme à l'invention et qui est plus précisément un procédé d'étalonnage de l'appareil électronique de détection et de comptage des figures 1 et 2,
- la figure 4 est un schéma illustrant la mise en oeuvre de plusieurs étapes du procédé d'étalonnage de la figure 3, et
- la figure 5 est un diagramme sur lequel des mesures successives effectuées par l'appareil électronique de détection et de comptage sont représentées en fonction du temps, en étant superposées à deux seuils déterminés par le procédé d'étalonnage de la figure 3.

## Description d'un mode préférentiel de l'invention

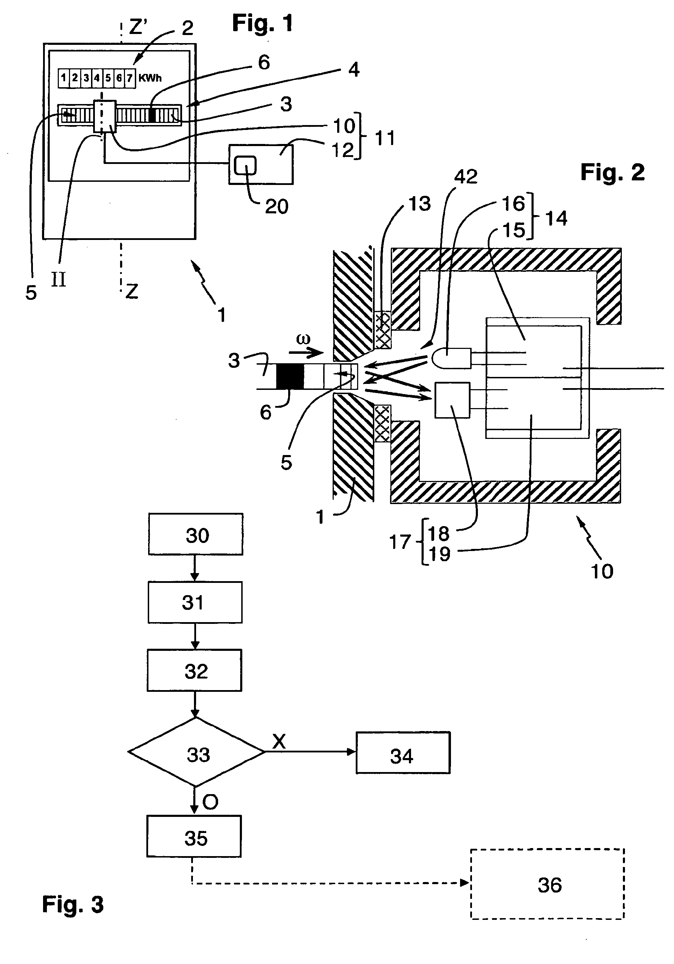

Sur la figure 1, la référence 1 désigne un compteur de consommation qui a pour fonction de mesurer une consommation d'énergie électrique et dont un afficheur mécanique 2 permet une lecture de cette consommation et son relevé manuel.

Le compteur 1 est un compteur électromécanique connu en soi, qui possède un disque rotatif interne 3 tournant sur un axe de rotation sensiblement vertical Z-Z', à une vitesse angulaire variable ω. Cette vitesse angulaire ou vitesse de rotation w est classiquement proportionnelle à la puissance instantanée que mesure continument le compteur de consommation 1. Visible par une fenêtre 4 percée dans le boîtier du compteur 1, le bord périphérique 5 du disque rotatif 3 porte localement une marque ou repère 6 détectable optiquement et, en particulier, visible par un oeil humain dans l'exemple représenté.

Au niveau de la fenêtre 4, une unité de mesure optique 10 est fixée sur la face avant du compteur 1, de manière à observer le bord 5 du disque rotatif 3. Elle fait partie d'un appareil électronique 11 de détection des passages du repère 6 et de comptage des tours effectués par ce repère. Cet appareil électronique de comptage 11 comporte en outre une unité électronique 12 de commande de l'unité de mesure 10 et de traitement de mesures en provenance de cette unité 10 sous forme d'un signal électrique.

La figure 2 est schématique dans un souci de clarté. En particulier, on y a omis certains éléments, par exemple une vitre de protection se trouvant devant le disque rotatif 3.

Ainsi qu'on peut le voir à la figure 2, l'unité de mesure 10 peut être fixée au moyen, par exemple, d'un adhésif double-face 13, sur la face avant du compteur de consommation 1. Elle comporte un dispositif d'éclairage 14 dans lequel un module électronique 15 commandé par l'unité 12 alimente périodiquement, pendant un bref moment, une diode électroluminescente 16 de sorte que celle-ci produise une lumière pulsée éclairant de manière intermittente le bord 5 du disque rotatif 3. L'éclairage intermittent de ce bord 5 a pour avantage d'être plus économique qu'un éclairage continu, en se traduisant par une moindre consommation d'énergie et une plus grande durée de vie de la diode 16.

Dans l'exemple représenté, la diode 16 produit une lumière infra-rouge. Toutefois, la lumière employée pour éclairer le disque rotatif 3 peut être constituée de rayonnements de n'importe quelles longueurs d'onde, y compris les longueurs d'onde de la lumière visible et celles de l'ultra-violet. A cet égard, dans le présent texte et dans les revendications annexées, les termes « éclairage », « lumière » et « rayonnement », ainsi que les termes analogues, ne se limitent pas à la lumière visible, mais entendent couvrir toutes les lumières au sens large et tous les choix possibles de longueur d'onde convenant, de l'infra-rouge à l'ultra-violet, en passant par la lumière visible.

Dans l'unité 10, un dispositif de mesure 17 possède un photo-détecteur ou capteur photosensible 18, prévu pour délivrer un signal fonction du flux de lumière infra-rouge reçu. Ce capteur 18 est tourné vers la zone périodiquement éclairée du bord 5, de manière à être exposé au rayonnement lumineux que réfléchit ce bord 5 lorsque la diode 16 l'illumine. Un module électronique 19 du dispositif de mesure 17 reçoit le signal délivré par le capteur 18 et le transmet à l'unité d'analyse 12.

Au niveau de l'unité d'analyse 12, des traitements classiques, par exemple une ou plusieurs amplifications et/ou filtrations, sont appliqués au signal délivré par l'unité de mesure 10. Chaque mesure relevée par l'unité d'analyse 12 porte sur une quantité de rayonnement en provenance de la région observée pendant l'un des éclairages, dont la fréquence est fixe. Deux mesures successives sont donc effectuées à deux moments successifs décalés entre eux d'une période fixe, qui est celle séparant deux éclairages successifs.

Outre les composants électroniques connus en eux-mêmes et non représentés prévus pour mettre en oeuvre les traitements classiques évoqués précédemment, l'unité d'analyse 12 comporte un microprocesseur 20, qui est à même de piloter un procédé d'auto-étalonnage de l'appareil électronique de détection et de comptage 11. Cette unité d'analyse 12 est également équipée d'un dispositif lui permettant d'émettre des données au sein d'un réseau domestique de communication, qui peut être du type sans fil.

Lors de la première mise en fonction de l'appareil électronique de comptage 11, le procédé d'auto-étalonnage de celle-ci peut être démarré par un opérateur s'étant préalablement assuré d'une mise en rotation du disque 3, par exemple au moyen d'un démarrage d'un équipement électrique.

Ainsi qu'on peut le voir à la figure 3, le procédé d'auto-étalonnage de l'appareil électronique de comptage 11 commence par une étape 30, dans laquelle une succession de mesures discontinues effectuées par l'unité 10 sont relevés pendant une durée prédéfinie alors que le disque rotatif 3 tourne. Cette durée prédéfinie est suffisante pour laisser au disque rotatif 3 le temps d'accomplir au moins une révolution entière. Par exemple, elle peut être de l'ordre d'une minute. En alternative, plusieurs détections du repère 6 peuvent servir à décider de mettre fin au relevé de mesures, notamment dans le cas où l'auto-étalonnage vise une adaptation à une dérive dans le temps des conditions de mesure et où il est mis en route automatiquement après une certaine période de fonctionnement depuis le dernier étalonnage.

Toujours dans l'étape 30, la succession de mesures relevée est soumise à une opération qui est une moyenne glissante. Une moyenne glissante est une moyenne qui est réitérée plusieurs fois et dont chaque nouvelle itération est effectuée sur un groupe renouvelé de mesures successives. Ce groupe est de taille constante. Les mesures d'un nouveau groupe sont décalées d'une période dans le temps, c'est-à-dire d'un rang dans la succession de mesures, par rapport aux mesures successives sur lesquelles la moyenne a été calculée à l'itération précédente. En d'autres termes, un groupe sélectionné pour une nouvelle itération comporte la mesure suivant immédiatement les dernières mesures employées dans l'itération précédente et il comporte également ces dernières mesures à l'exception de la première d'entre elles.

Dans l'exemple choisi, la moyenne à chaque nouvelle itération est calculée sur trois mesures successives, selon la formule suivante :

$$A_i = \frac{S_i + S_{i-1} + S_{i-2}}{3} \qquad (1)$$

Dans cette formule, les indices sont des nombres entiers indiquant des rangs dans la succession chronologique des mesures. Si est la $i^{\text{ème}}$ mesure, c'est-à-dire la mesure au $i^{\text{ème}}$ moment à compter de la première mesure dans la succession de mesures. $S_{i-1}$ et $S_{i-2}$ sont respectivement la mesure directement précédente dans la succession de mesures et la mesure précédant directement $S_{i-1}$. $A_i$ est la $i^{\text{ème}}$ moyenne calculée, à laquelle est attribuée le rang i.

Bien entendu, le nombre de mesures successives dans un groupe peut être différent de trois, dès lors qu'il est inférieur au nombre minimal de mesures successives pouvant être faites au niveau du repère 6, c'est-à-dire au nombre de mesures qui sont faites à la suite sur ce repère 6 lorsque le disque 3 tourne à sa vitesse maximale. Par exemple, chaque moyenne peut être effectuée sur un nombre de cinq mesures dans chaque groupe. Dans ce cas, la formule pour le calcul de chaque moyenne est :

$$A_i = \frac{S_i + S_{i-1} + S_{i-2} + S_{i-3} + S_{i-4} + S_{i-5}}{5}.$$

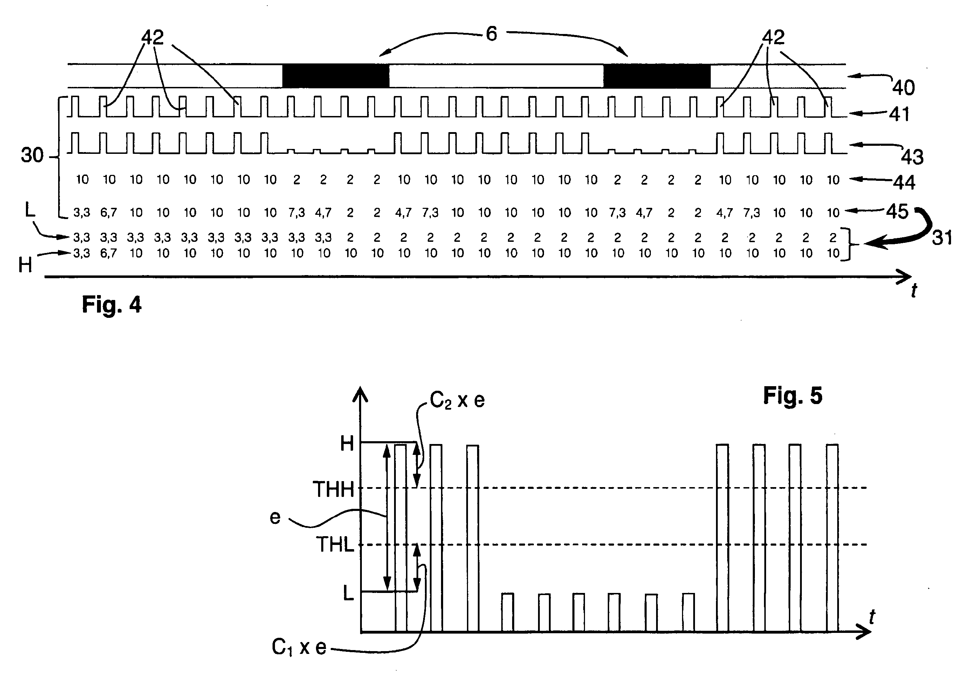

La figure 4 illustre une mise en oeuvre de la moyenne glissante dans le cas d'un calcul sur un groupe de trois mesures à chaque itération, ainsi qu'une autre étape exposée plus loin que comporte le procédé d'étalonnage. Sur cette figure 4, différentes données sont superposées en dessous d'un axe commun des temps t, sur lequel elles sont toutes calées de la même manière. La ligne 40 symbolise ce que l'unité de mesure 10 voit du bord 5 au cours du temps. Les portions pleines correspondent à la présence du repère 6 dans la région observée par l'unité 10, lors de la mesure.

A la ligne 41, chaque barre symbolise un éclairage par la diode 16, c'est-à-dire une pulsation lumineuse 42. La ligne 43 représente la valeur du signal que le capteur photosensible 18 délivre au cours du temps. A la ligne 44 figurent les valeurs des mesures successives que l'unité d'analyse 12 relève à partir du signal délivré par le capteur photosensible 18. La ligne 45 contient les valeurs de la moyenne glissante telles qu'elles sont progressivement calculées.

La moyenne glissante lisse des irrégularités parasites, qui peuvent comprendre des disparités affectant arbitrairement l'état de surface du bord 5 et des variations intempestives des conditions d'éclairage.

Dans l'étape référencée 31 à la figure 3, on détermine le minimum L et le maximum H de la moyenne glissante. Cette étape 31 peut intervenir après l'étape 30. Elle peut également être conduite parallèlement à cette étape 30, ce qui est le cas dans l'exemple représenté à la figure 4.

Une étape 32 suit l'étape 31. On y détermine l'écart e séparant le maximum H du minimum L : $e = H - L$.

Ensuite, on effectue un test 33 dans lequel on compare l'écart e à une limite prédéterminée, par exemple de l'ordre de 1%. Si l'écart e est inférieur à cette limite prédéterminée, on déclenche une alarme 34 signifiant que la détection du passage du repère 6 dans la région observée manquera de précision. Dans le cas contraire, on passe à une étape 35.

Dans cette étape 35, on calcule deux seuils, à savoir un seuil bas THL et un seuil haut THH, au moyen des formules suivantes :

$$THL = L + c_1 \times e \qquad (2)$$

$$THH = H - c_2 \times e \qquad (3)$$

Valeurs absolues de coefficients prédéfinis, $c_1$ et $c_2$ sont compris entre 0 et 1. Avantageusement, chacun d'eux est compris entre 0,1 et 0,4. De préférence, $c_1$ et $c_2$ sont sensiblement égaux et de l'ordre de 0,3, ce qui est le cas dans l'exemple présenté ici.

Le procédé d'étalonnage prend fin avec le calcul des seuils THL et THH, qui sont ensuite employés dans la détection des passages du repère 6 dans la région observée et dans une opération 36 qui utilise cette détection et qui est un comptage des tours complets effectués par le repère 6.

La détection d'un passage du repère 6 au moyen des seuils THL et THH est illustrée à la figure 5, où le temps t est en abscisse. Sur cette figure 5, chaque barre correspond à l'une de plusieurs mesures successives relevées par l'unité d'analyse 12 au cours du temps lors de pulsations lumineuses 42, tandis que le disque 3 tourne. Chaque barre a une hauteur proportionnelle à la valeur de la mesure qu'elle figure. Le seuil bas THL et le seuil haut THH, ainsi que les extrémums L et H, sont reportés sur la figure 5 en respectant la même échelle que celle employée pour la hauteur des barres.

Sur la gauche de la figure 5, le repère 6 est en dehors de la région observée par l'unité de mesure 10 et les barres sont au dessus des seuils THL et THH. Lorsque les mesures franchissent ensuite le seuil bas THL dans le sens descendant, on en déduit que le repère 6 est arrivé au niveau de la région observée. Les mesures restent en dessous du seuil haut THH tant que le repère 6 est au niveau de la région observée. Lorsque les mesures franchissent ensuite ce seuil haut THH dans le sens ascendant, on en déduit que le repère 6 est sorti de la région observée.

Conformément au paragraphe précédent, la succession d'un franchissement du seuil bas THL dans le sens descendant et d'un franchissement du seuil haut THH dans le sens ascendant est interprétée comme un passage du repère 6 dans la région observée. Le comptage des tours utilise la détection des passages du repère 6 dans la région observée, dans la mesure où deux tels passages successifs signifient que le disque 3 a effectué au moins une révolution complète.

L'invention ne se limite pas aux modes de réalisations décrits précédemment. En particulier, seulement un seuil peut être déterminé à l'étape 35, par exemple comme étant à égale distance du minimum L et du maximum H de la moyenne glissante, auquel cas on peut considérer qu'un passage du repère 6 dans la région observée est détecté lorsque ce seuil a été franchit dans le sens descendant puis dans le sens ascendant.

**Revendications**

1. Procédé d'étalonnage d'un appareil électronique (11) de comptage de tours d'un repère (6) entraîné dans un compteur de consommation (1), **caractérisé en ce qu'il** comporte des étapes dans lesquelles :

    a) à différents moments successifs pendant plus d'un tour complet du repère (6), on relève des mesures d'une grandeur lumineuse relative à un rayonnement en provenance d'une région observée où passe ledit repère (6), et
    b) on effectue une moyenne glissante (45) sur lesdites mesures, puis
    c) à partir de la moyenne glissante (45), on définit au moins un seuil (THL, THH) tel que le franchissement de ce seuil signifie un passage du repère (6) dans la région observée.

2. Procédé d'étalonnage selon la revendication 1, **caractérisé en ce que** l'étape c) comprend elle-même des étapes dans lesquelles :

    c1) on identifie un minimum (L) et un maximum (H) de la moyenne glissante (45),
    c2) on calcule l'écart (e) séparant le minimum (L) du maximum (H), et
c3) au moins à partir dudit écart et d'un extrémum choisi parmi le minimum (L) et le maximum (H), on définit au moins ledit seuil (THL, THH).

3. Procédé d'étalonnage selon la revendication 2, **caractérisé en ce qu'il** comprend des étapes qui suivent l'étape c2) et dans lesquelles :

    - on compare l'écart (e) à une limite prédéterminée, et
    - si l'écart (e) est inférieur à la limite prédéterminée, on déclenche une alarme (34).

4. Procédé d'étalonnage selon l'une quelconque des revendications 2 et 3, **caractérisé en ce que**, dans l'étape c3), on détermine ledit seuil (THL, THH) comme étant égal à la somme de l'extrémum choisi (L, H) et d'un produit dudit écart (e) par un coefficient qui est supérieur à 0 et inférieur à 1, si l'extrémum choisi est ledit minimum (L), et qui est supérieur à -1 et inférieur à 0, si l'extrémum choisi est ledit maximum (H).

5. Procédé d'étalonnage selon l'une quelconque des revendications 2 à 4, **caractérisé en ce que**, dans l'étape c3), on détermine ledit seuil (THL) comme étant égal à la somme dudit minimum (L) et d'un produit dudit écart (e) par un coefficient qui est supérieur à 0 et inférieur à 1, et on détermine un autre seuil (THH) comme étant égal à la somme dudit maximum (H) et d'un produit dudit écart (e) par un autre coefficient qui est supérieur à -1 et inférieur à 0.

6. Procédé d'étalonnage selon l'une quelconque des revendications 4 et 5, **caractérisé en ce que** le ou chaque coefficient a une valeur absolue comprise entre 0,1 et 0,4.

7. Procédé d'étalonnage selon l'une quelconque des revendications précédentes, **caractérisé en ce que**, dans l'étape a), on effectue des éclairages intermittents (42) en direction d'une zone où ledit repère (6) passe dans la région observée, chacune desdites mesures portant sur une quantité de rayonnement en provenance de la région observée, pendant l'un des éclairages (42).

8. Procédé d'étalonnage selon l'une quelconque des revendications précédentes, **caractérisé en ce que**, dans l'étape b), on choisit une mesure particulière parmi les mesures et, jusqu'à une réponse positive à un test de fin, on réitère une suite d'étapes dans lesquelles :

    - parmi les mesures, on sélectionne un groupe de mesures qui se précèdent dans le temps à partir de ladite mesure particulière, puis

- on effectue une moyenne sur les mesures du groupe, puis
- à la mesure particulière, on attribue le statut d'ancienne mesure particulière et, parmi les mesures, on choisit comme mesure particulière une mesure qui n'a pas le statut d'ancienne mesure particulière.

9. Appareil électronique de comptage de tours d'un repère (6) entraîné dans un compteur de consommation (1), comportant un dispositif (17) de mesure d'une grandeur lumineuse relative à un rayonnement en provenance d'une région observée où passe ledit repère (6), **caractérisé en ce qu'il** comporte :

- un moyen (12) pour relever des mesures réalisées par le dispositif de mesure (17) à différents moments successifs pendant plus d'un tour complet du repère (6),
- un moyen (20) pour effectuer une moyenne glissante (45) sur lesdites mesures,
- un moyen pour définir, à partir de la moyenne glissante (45), au moins un seuil (THL, THH) tel que le franchissement de ce seuil signifie un passage du repère (6) dans la région observée.

10. Appareil électronique de comptage selon la revendication 9, **caractérisé en ce qu'il** est adapté pour s'étalonner en conduisant pour lui-même un procédé selon l'une quelconque des revendications 1 à 8.

**Patentansprüche**

1. Verfahren zum Eichen eines elektronischen Geräts (11) zum Zählen der Umdrehungen einer in einem Verbrauchszähler (1) angetriebenen Eichmarke (6), **dadurch gekennzeichnet, dass** es folgende Schritte umfasst:

a) zu unterschiedlichen, aufeinanderfolgenden Zeitpunkten während mehr als einer kompletten Umdrehung der Eichmarke (6) Messungen einer Lichtstärke vorgenommen werden, die sich auf eine Strahlung bezieht, die aus einem beobachteten Bereich kommt, in den die genannte Eichmarke (6) gelangt, und
b) aus diesen Messungen ein gleitender Mittelwert (45) erhoben wird und dann,
c) ausgehend von dem gleitenden Mittelwert (45) mindestens ein Schwellenwert (THL, THH) bestimmt wird, sodass das Überschreiten dieses Schwellenwerts bedeutet, dass die Eichmarke (6) in den beobachteten Bereich gelangt ist.

2. Eichverfahren nach Anspruch 1, **dadurch gekenn-**

**zeichnet, dass** Schritt c) selbst wiederum Schritte umfasst, in denen:

c1) ein Mindestwert (L) und ein Höchstwert (H) des gleitenden Mittelwerts (45) ermittelt werden,
c2) der Abstand (e) zwischen dem Mindestwert (L) und dem Höchstwert (H) berechnet wird, und
c3) mindestens ausgehend von diesem Abstand und einem Extremwert, der aus dem Mindestwert (L) und dem Höchstwert (H) ausgewählt ist, mindestens der genannte Schwellenwert (THL, THH) festgelegt wird.

3. Eichverfahren nach Anspruch 2, **dadurch gekennzeichnet, dass** es folgende Schritte umfasst, die auf Schritt c2) folgen und in denen:

- der Abstand (e) mit einem vorbestimmten Grenzwert verglichen wird und,
- falls der Abstand (e) kleiner ist als der vorbestimmte Grenzwert, ein Alarm (34) ausgelöst wird.

4. Eichverfahren nach einem der Ansprüche 2 und 3, **dadurch gekennzeichnet, dass** in Schritt c3) der genannte Schwellenwert (THL, THH) als gleich der Summe des gewählten Extremwerts (L, H) und eines Produkts des Abstands (e) durch einen Koeffizienten bestimmt wird, der größer als 0 und kleiner als 1 ist, wenn der gewählte Extremwert der genannte Mindestwert (L) ist, und der größer als -1 und kleiner als 0 ist, wenn der gewählte Extremwert der genannte Höchstwert (H) ist.

5. Eichverfahren nach einem der Ansprüche 2 bis 4, **dadurch gekennzeichnet, dass** in Schritt c3) der genannte Schwellenwert (THL) als gleich der Summe des Mindestwerts (L) und eines Produkts des Abstands (e) durch einen Koeffizienten bestimmt wird, der größer als 0 und kleiner als 1 ist, und ein weiterer Schwellenwert (THH), der gleich der Summe des Höchstwerts (H) und eines Produkts des Abstands (e) durch einen weiteren Koeffizienten bestimmt wird, der größer als -1 und kleiner als 0 ist.

6. Eichverfahren nach einem der Ansprüche 4 und 5, **dadurch gekennzeichnet, dass** der oder die Koeffizient/en einen absoluten Wert von 0,1 bis 0,4 hat/haben.

7. Eichverfahren nach einem der vorstehenden Ansprüche, **dadurch gekennzeichnet, dass** in Schritt a) intermittierende Beleuchtungen (42) in Richtung auf einen Bereich erfolgen, in dem die Eichmarke (6) in den beobachteten Bereich gelangt, wobei jede der genannten Messungen sich auf eine Strahlungsmenge bezieht, die während einer der Beleuchtungen (42) aus dem beobachteten Bereich kommt.

**8.** Eichverfahren nach einem der vorstehenden Ansprüche, **dadurch gekennzeichnet, dass** in Schritt b) eine spezielle Messung aus den Messungen ausgewählt und bis zu einer positiven Antwort auf einen Abschlusstest eine Folge von Schritten wiederholt wird, in denen:

- aus den Messungen eine Reihe von Messungen ausgewählt wird, die einander ab der speziellen Messung in der Zeit vorausgehen, dann
- ein Mittelwert aus den Messungen der Reihe ermittelt wird, dann
- der speziellen Messung der Status einer ehemaligen speziellen Messung zugeordnet wird und aus den Messungen eine Messung als spezielle Messung ausgewählt wird, die keinen Status einer ehemaligen speziellen Messung hat.

**9.** Elektronische Zählvorrichtung der Umdrehungen einer in einem Verbrauchszähler (1) angetriebenen Eichmarke (6), die eine Vorrichtung (17) zum Messen einer Lichtstärke umfasst, die sich auf eine Strahlung bezieht, die aus einem beobachteten Bereich kommt, in den die genannte Eichmarke (6) gelangt, **dadurch gekennzeichnet, dass** sie umfasst:

- ein Mittel (12) zur Erhebung von Messungen, die von der Messvorrichtung (17) zu unterschiedlichen, aufeinanderfolgenden Zeiten während mehr als einer kompletten Umdrehung der Eichmarke (6) durchgeführt wurden,
- ein Mittel (20) zur Erhebung eines gleitenden Mittelwerts (45) aus diesen Messungen,
- ein Mittel zur Bestimmung mindestens eines Schwellenwerts (THL, THH) aus dem gleitenden Mittelwert (45), sodass das Überschreiten dieses Schwellenwerts bedeutet, dass die Eichmarke (6) in den beobachteten Bereich gelangt ist.

**10.** Elektronische Zählvorrichtung nach Anspruch 9, **dadurch gekennzeichnet, dass** sie geeignet ist, sich selbst zu eichen, indem sie selbst ein Verfahren nach einem der Ansprüche 1 bis 8 durchführt.

**Claims**

**1.** Method of calibrating an electronic device (11) for counting revolutions of a mark (6) rotating in a consumption meter (1), **characterized in that** it comprises steps in which:

a) at different successive times during more than one full revolution of the mark (6), we collect measurements of a luminous quantity relative to a radiation originating from an observed region, the said mark (6) passing through the observed region, and

b) we calculate a moving average (45) of said measurements, and then
c) based on the moving average (45), we define at least one threshold (THL, THH) such that the crossing of this threshold means that the mark (6) has passed through the observed region.

**2.** Calibration method according to claim 1, **characterized in that** step c) itself comprises steps in which:

c1) we identify a minimum (L) and a maximum (H) of the moving average (45),
c2) we calculate interval (e) separating the minimum (L) from the maximum (H), and
c3) at least based on said interval and a limiting value selected between the minimum (L) and the maximum (H), we define at least said threshold (THL, THH).

**3.** Calibration method according to claim 2, **characterized in that** it comprises steps following step c2) and in which:

- we compare the interval (e) with a predetermined limit, and
- if the interval (e) is smaller than the predetermined limit, starting an alarm (34).

**4.** Calibration method according to any of claims 2 and 3, **characterized in that**, at step c3), said threshold (THL, THH) is determined as being equal to the sum of the selected limiting value (L, H) and of a product of said interval (e) by a coefficient which is greater than 0 and smaller than 1, if the selected limiting value is said minimum (L), and which is greater than -1 and smaller than 0 if the selected limiting value is said maximum (H).

**5.** Calibration method according to any of claims 2 to 4, **characterized in that**, at step c3), said threshold (THL) is determined as being equal to the sum of said minimum value (L) and of a product of said interval (e) by a coefficient which is greater than 0 and smaller than 1, and determining another threshold (THH) as being equal to the sum of said maximum (H) and of a product of said interval (e) by another coefficient which is greater than -1 and smaller than 0.

**6.** Calibration method according to any of claims 4 and 5, **characterized in that** the or each coefficient has an absolute value in the range from 0.1 to 0.4.

**7.** Calibration method according to any of the foregoing claims, **characterized in that**, at step a), an intermittent illumination (42) towards an area where said mark (6) passes in the observed region is performed, each of said measurements being performed on a quantity of radiation originating from the observed region during one of the illumination periods (42).

8. Calibration method according to any of the foregoing claims, **characterized in that**, at step b), a specific measurement is selected from among the measurements and, until a positive response to an end test, a sequence of steps is repeated, the steps in which:

   - among the measurements, we select a group of successive measurements coming just before said specific measurement, and then
   - we calculate an average of the measurements in the group, and then
   - we assign to the specific measurement the status of old specific measurement and, among the measurements, we select as a specific measurement a measurement which does not have the status of old specific measurement.

9. Electronic device for counting revolutions of a mark (6) rotating in a consumption meter (1), comprising a device (17) for measuring a luminous quantity relative to a radiation originating from an observed region and wherein the said mark (6) passes through the observed region, **characterized in that** it comprises:

   - means (12) for collecting measurements performed by the measurement device (17) at different successive times during more than one full revolution of the mark (6),
   - means (20) for calculating a moving average (45) of said measurements,
   - means for defining, from the moving average (45), at least one threshold (THL TLL) such that a crossing of this threshold means that the mark (6) has passed through the observed region.

10. Electronic counting device according to claim 9, **characterized in that** it is capable of calibrating by carrying out for itself a method according to any of claims 1 to 8.

**Fig. 1**

**Fig. 2**

**Fig. 3**

EP 2 634 537 B1

42    6    42

40

41

30    43

44    10 10 10 10 10 10 10 10 2 2 2 2 10 10 10 10 10 10 10 10 2 2 2 2 10 10 10 10 10

45    3,3 6,7 10 10 10 10 10 10 7,3 4,7 2 2 4,7 7,3 10 10 10 10 10 10 7,3 4,7 2 2 4,7 7,3 10 10 10

L    3,3 3,3 3,3 3,3 3,3 3,3 3,3 3,3 3,3 3,3 2 2 2 2 2 2 2 2 2 2 2 2 2 2 2 2 2 2 2    31

H    3,3 6,7 10 10 10 10 10 10 10 10 10 10 10 10 10 10 10 10 10 10 10 10 10 10 10 10 10 10 10

t

**Fig. 4**

$C_2 \times e$

H

THH

e

THL

L

$C_1 \times e$

t

**Fig. 5**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2303712 A
- GB 2349945 A